# EUROPEAN PATENT SPECIFICATION

(11) **EP 4 331 832 B1**
(45) Date of publication and mention of the grant of the patent: **04.02.2026**
(21) Application number: 23194709.4
(22) Date of filing: 31.08.2023
(51) Int. Cl.: B32B 7/027, B32B 5/02, B32B 7/12, B32B 15/14, B32B 15/20, B32B 27/12, E04B 1/78

(54) **MULTILAYER MATERIAL FOR THERMAL INSULATION**
MEHRSCHICHTIGES MATERIAL ZUR WÄRMEDÄMMUNG
MATÉRIAU MULTICOUCHE POUR ISOLATION THERMIQUE

(30) Priority: 02.09.2022 EP 22193723
(43) Date of publication of application: 06.03.2024
(73) Proprietor: Trocellen GmbH, 53840 Troisdorf (DE)
(72) Inventor: ARZUFFI, Marco Giancarlo, 24040 Filago (IT); ALICINO, Davide, 20851 Lissone (IT); CAIAZZO, Francesco Giuseppe, 20092 Cinisello Balsamo (IT); VARIN, Andrea, 20831 Seregno (IT)
(74) Representative: HKW Intellectual Property PartG mbB

(56) References cited:
- EP-A1- 2 455 221
- EP-B1- 2 812 508
- WO-A1-99/29500
- JP-A- 2019 184 195
- US-A1- 2009 133 347
- US-A1- 2012 040 161
- US-A1- 2020 247 085

## Description

The present invention relates to a material having a plurality of layers and which is suitable for thermal insulation.

Flat insulating materials are often used in the form of panels for construction purposes. Due to safety regulations insulation materials sometimes need to have fire-resistant or fire-retardant properties. At the same time, it is desirable to use environmentally friendly materials, that can be disposed in a residue-free manner, e.g. the material can be burned with a low environmental impact compared to plastic fiber-or foam-based insulation materials. In particular, natural fibers are candidates for insulation materials (https://www.architectsjournal.co.uk/specification/natural-insulation-materials).

US 2020/0247085 discloses an insulating panel having a fire-resistant backing layer, wherein an insulating layer is based on polyurethane foam and reenforced with (combustible) wood fibers. US 2020/0247085 suggests a backing layer made of metal.

US 2012/0040161 A1 discloses a three-layer insulation system with an inner layer, an intermediate layer and an outer layer. The inner layer may include metal foils or sheets forming a three-dimensional structure to minimize contact. The intermediate layer may comprise metal particles to obtain a thermal gradient. The outer layer is an expanded polymer blend as an insulation layer.

WO 99/29500 discloses an insulation material with sequential layers of a fiber pad material and aluminum foil laminated to one another, where the pad material includes graphite particles bonded to interlocked fiber strands.

EP 2 455 221 A1 discloses an insulating material with fire retardant properties. The material has a fibrous outermost layer of low combustibility, an inner protective layer comprising a non-combustible foil, and a substrate of an expanded polymer blend.

US 2009/0133347 A1 discloses a flexible insulation material to be attached to a HVAC duct. The insulation material includes a substrate containing nonwoven lofted fibers and a facer sheet laminated thereto. The facer sheet includes a polymeric film bonded to the substrate and a metallization layer on the polymeric film.

JP 2019 184195 A discloses a heat insulating layer for a ventilation or air conditioning duct, the layer being made of thermoplastic resin foam or thermoplastic fibers with a fire retardant such as expandible graphite. An airtight layer with an aluminum foil is laminated thereon.

It is an object of this disclosure to provide an improved material suitable for thermal insulation purposes and having an improved environmental sustainability level.

The invention relates to a multilayer material for thermal insulation according to claim 1, the use of a multilayer material according to claim 12, and a method for manufacturing a multilayer material according to claim 15. Specific embodiments are described in the dependent claims.

In embodiments, the multilayer material has one or more of the following features:
- The fire-resistant layer is implemented to be an outer layer, in particular subject to weather, a humid atmosphere and/or a factory floor environment. In case of a fire, the fire-resistant layer as outermost layer protects the vapor barrier and insulation layer from being inflamed. The fire-resistant layer can be implemented as a sheet-like material, which is much thinner than the insulation layer to fulfill its function. The insulative property of the insulation layer increases with its thickness.
- The fire-resistant layer is a flat material and has a first rigidity, and the insulating material has a second rigidity, wherein the first rigidity is larger than the second rigidity. The fire-resistant layer can be manufacture separately and merged to the multilayer system. A relatively high rigidity with respect to the other layers improves its manageability. Further, the rigid fire-resistant layer supports the entire multilayer structure and allows for insulation materials such as nonwoven materials made of the combustible fibers.
- The fire-resistant layer is a flat material and has a first mass density, and the insulating material has a second mass density, wherein the first mass density is higher than the second mass density. The insulating material may be based on combustible fibers, fiber strands, or the like that are interlocked, a mat of fibers, fleece or the like containing a relatively high amount of void space between the fibers. A low mass density leads to lightweight multilayer materials.
- The layers are sheet materials, wherein at least the fire-resistant layer and the insulating layer are self-supporting prior to being bonded to the vapor barrier layer.
- The multilayer material is a self-supporting panel.
- The insulation layer is free from a foamed material, in particular free from polyurethane foam. Refraining from foamed, cellular materials, in particular from synthetic materials, improves its environmental sustainability. The multilayer material with a high amount of natural materials reduces its environmental impact, can be easier disposed of in terms of waste management and produces less pollution if the material is incinerated.
- The insulation layer is made of a non-woven fibrous material, in particular comprising void regions between fibers. Preferably the insulation layer is free from expandible graphite.

The proposed multilayer material can be produced by laminating the three functional layers together using an adhesive, such as a glue or a hot melt. The material may be rigid or suitably flexible and smooth to cover technical or construction equipment, e.g. air ducts in an HVAC (heating, ventilation, air conditioning) system or heating pipes.

Employing hemp as combustible fiber material leads to an environmentally friendly multilayer material based on a renewable raw material (hemp). Hemp exhibits relatively flexible fibers that can be processed into non-woven material suitable for insulating purposes.

In embodiments, the multilayer material is adapted to comply with a Euroclass EN 13501-1 B fire rating at the time of filing this application.

In embodiments, the fire-resistant layer comprises a mechanically reinforcing fibrous material, expandible graphite particles, a resin, additives and fillers.

The resin may be SBR (Styrene Butadiene Rubber), acrylic styrol or acrylic polymer type resin, a polymeric dispersion of polymers or copolymers such as, for example, acrylics, vinyls, silicone, silanes, polyurethanes, phenolic resins.

The fillers may be inert mineral fillers, such as calcium carbonate, fire-resistant fillers such as for example, colemanite/magnesium hydroxide or another equivalent additive.

The additives may be a de-aerating agent, a thickener, an anti-sedimenting agent, wetting agent, an anti-mould agent, anti-bacteria agent, anti-insect agent.

The reinforcing fibrous material may be fiberglass or mineral fibers.

Sodium silicate can be added as a binding agent.

In embodiments, the insulating layer contains less than 20 wt% synthetic foam material, in particular a synthetic polymer foam, preferably less than 10 wt%, and even more preferred less than 5 wt%. A reduction of synthetic material in the multilayer systems renders the material environmentally more friendly and at the same time functional.

In embodiments, laminating the three layers is achieved by a deploying a viscous glue or a flexible, bi-adhesive tape. Using a bi-adhesive tape reduces a diffusion of glue into the fiber-containing insulating layer. Preferably, a liquid or viscous glue is used having a viscosity such that only superficial fibers are covered by the glue. Viscosity value of the glue must be less than 8000 mPa.s, preferably between 4500 and 7500 mPa.s (according to ASTM D3236 @170 °C for the hot-melt glue).

In embodiments the insulating layer comprises at least 50 wt% natural fibers, preferably 80 wt% natural fibers, and even more preferred 90wt%. One may contemplate an insulating layer having 100wt% natural fibers.

In embodiments the insulating layer is a wood-fiber panel, a wool panel or a hemp-fiber panel.

In embodiments, the insulating layer comprises polyester fibers, preferably recycled polyester fibers. In embodiments the fraction of recycled polyester fibers in the insulating layer is at least 50 wt% polyester fibers, preferably 80 wt% polyester fibers, and even more preferred 90wt% polyester fibers. One may contemplate an insulating layer having 100wt% polyester fibers.

In embodiments the vapor-barrier layer includes a metal foil and/or a polymer foil.

In embodiments the vapor-barrier layer and the insulating layer are laminated to one another and show a lamination strength of at least 4 N/5cm at 20°C (according to Afera 5001 - Measurement of Peel Adhesive from Stainless Steel or from its Own Backing ISO 29862 - EN 1939 method F) and even more preferred at least 4.5 N/5cm. The specified lamination strength leads to a reliable adhesion of the laminated layers to one another and thus a mechanically robust multilayer material.

According to an aspect of this disclosure a method for manufacturing a multilayer material, in particular according to the above and below, is presented, the method comprising:
laminating a fire-resistant layer comprising expandible graphite with a
a vapor-barrier layer comprising a metal foil or a polymeric foil through a first lamination process; and
laminating the vapor-barrier layer with an insulating layer comprising combustible fibers through a second lamination process;
wherein the laminated vapor-barrier layer and insulating layer have a predetermined lamination strength.

In embodiments the vapor-barrier layer and the insulating layer are glued to one another for obtaining a lamination strength of at least 4 N/5cm at 20°C (according to Afera 5001 - Measurement of Peel Adhesive from Stainless Steel or from its Own Backing ISO 29862 - EN 1939 method F) and even more preferred at least 4.5 N/5cm.

The lamination process for laminating the insulating layer with the vapor barrier layer may comprise the steps:
applying a hot-melt glue material on a surface of the vapor barrier layer;
placing a surface of the insulation layer onto the hot melt glue applied to the surface of the vapor barrier layer; and
applying pressure to the insulation layer and vapor barrier layer attached to each other through the hot melt glue for a predetermined time.

In embodiments, the pressure is at least 0.5 bar, preferably 1 bar and even more preferred 2 bar.

Applying the pressure may involve one or more rollers pinching the insulation layer and vapor barrier layer attached to each other, in particular feeding the sandwiched insulation and vapor barrier layer at a predetermined speed. The roller may be spaced to one another and compress the sandwiched insulation and vapor barrier layer along their thickness direction. The predetermined time may be realized by a feed velocity. For example, the speed is between 7 and 9 m/min.

Applying a hot-melt glue material may involve heating the hot-melt glue material to a predetermined temperature for obtaining a predetermined viscosity of the melted hot-melt glue material. For example, the temperature is between 50 (in the pre-melting phase) and 150 °C (in the glue dispenser head).

In particular, parameters characterizing the lamination process, such as the temperature, pressure, feed velocity, are set so that a desired lamination strength is obtained. The above specified laminating or lamination process allows to securely attach the functional layers of the multilayer system, in particular to form a material containing a fibrous layer with essentially flat and/or porous surfaces of the fire-retardant material and the vapor-barrier material.

It is understood that the term "vapor-barrier layer" refers to a functional membrane with a reduced water vapor permeability with respect to the insulating layer, or an increased water vapor diffusion resistance with respect to the insulating layer, respectively. For example, the water vapor resistance across the vapor-barrier layer is at least 100 times the water vapor resistance across the insulating layer.

The water vapor resistance factor µ refers to the vapor resistivity as a ratio of the resistivity of still air, and the Sd value is a materials resistance in terms of an equivalent of air thickness. The water vapor resistance factor µ and/or Sd value is measured according to EN ISO 7783 or EN ISO 10456 or EN 13859-1 or EN 12086 or EN ISO 12572.

In embodiments, the Sd value of the vapor-barrier layer is between 100 m and 2000 m.

In embodiments, the fire-resistant layer comprises a backing layer according to EP 2 812 508 B1, in particular the fire-resistant layer comprises a cladding layer sandwiched between a functional layer comprising expansive or expandible graphite, and a reinforcement layer including a fibrous material for mechanical support, wherein the cladding layer is manufactured with a first fluid mineral mixture comprising a resin, additives and fillers.

According to the invention, the fire-resistant layer has a thickness between 0.2 and 10 mm, the insulating layer has a thickness between 0.5 and 20 cm, and the insulating layer is thicker than the fire-resistant layer.

In embodiments the fire-resistant layer has a thickness less than 2mm. The fire-resistant layer may have a grammage between 300 and 800 g/m². A thickness and/or a grammage can be measured according to EN 1849-2 at the time of filing this application.

In embodiments the vapor-barrier layer has a thickness between 10 and 80µm, preferably less than 60µm, even more preferred less than 50µm. Smaller thicknesses may lead to better flexibility and less surface weight or mass per unit area. Consequently, the multilayer material has an improved handling quality.

A ratio of the thickness d1 of the fire-resistant layer and the thickness d2 of the insulation layer is, e.g. d2/d1 > 10, preferably > 15, and even more preferred > 20.

In embodiments the insulating layer comprises less than 50 wt% synthetic fibers and/or synthetic polymer material, preferably less than 30 wt% and even more preferred less than 10 wt% synthetic fibers and/or synthetic polymer material. In some embodiment the insulating layer is free from synthetic fibers and/or synthetic polymer material.

It is understood that the fractions, portions or percentages of fibers, e.g. natural, synthetic and/or recycled fibers adds up to 100 wt%. The insulating layer may further contain functional materials which are not fibers. In embodiments the wt% is measured with respect to the total weight of the insulating layer material. One may also refer to the mass fraction of the respective material.

According to a further aspect of this disclosure, an HVAC apparatus comprising a duct having at least one wall is presented, wherein a surface of the wall is at least partially covered by a multilayer material according to the aspects above or below. The surface may be an interior surface enclosing an interior volume and/ or an exterior surface facing towards the environment of the HVAC apparatus.

In embodiments, the wall is covered on both sides or surfaces with the multilayer material. One may obtain a wall of the duct sandwiched between two sheets of the multilayer material, wherein the insulating layers face towards the duct wall.

In particular, the wall, the insulating layer, the vapor-barrier layer and the fire-resistant layer are arranged sequentially in this order. Further layers can be included. Preferably, the fire-resistant layer is the outermost layer.

The wall may be continuously cladded with the multilayer material along a circumferential direction of the duct. Thus, preferably, the duct is completely covered and insulated along its circumference.

In embodiments, the duct wall is an air-tight wall, e.g. made of a metal or plastic material.

Further embodiments, features and advantages of the present invention will become apparent from the subsequent description and dependent claims, taken in conjunction with the accompanying drawings, in which:
Fig. 1 shows an embodiment of a multilayer material;
Fig. 2 shows an embodiment of a vapor barrier layer suitable for the multilayer material;
Fig. 3 shows an apparatus for illustrating steps involved in a manufacturing method for the multilayer material; and
Fig. 4 shows a further embodiment of a multilayer material;
Fig. 5 shows an embodiment of an HVAC apparatus equipped with an insulation based on embodiments of the multilayer material.

In the Figures, like reference numerals designate like or functionally equivalent elements, unless otherwise indicated.

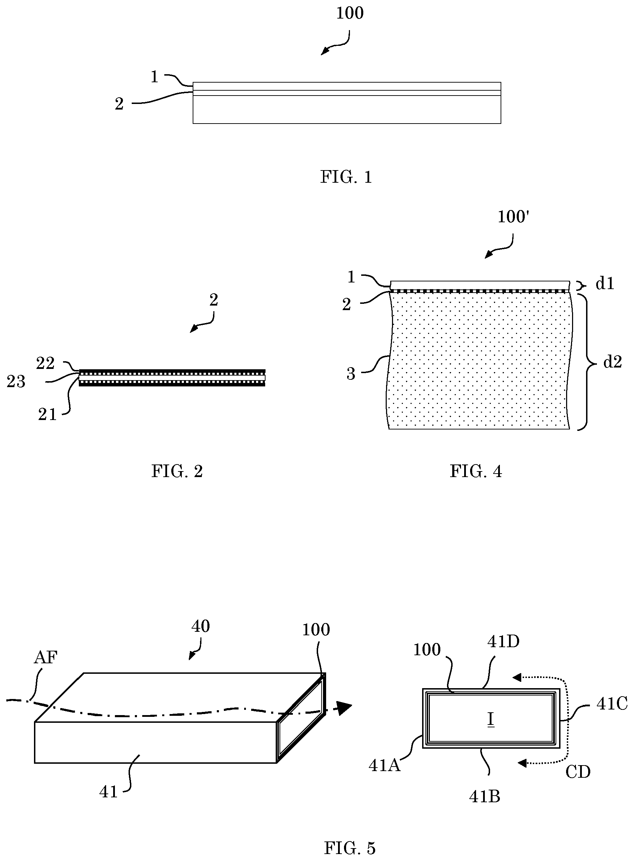

Fig. 1 shows an embodiment of an insulating material 100 having a plurality of layers. The insulating material comprises three functional layers 1 ,2 ,3. The first layer is a fire-resistant or fire-retardant layer 1 comprising expandible graphite. The fire-resistant-material can be obtained from Elements s.r.l. under the brand name METRA ZERO and may correspond to the backing layer according to EP 2 812 508 B1.

The fire-resistant layer, is for example, manufactured according to paragraphs [0025] to [0068] of EP 2 812 508 B1 where the "first backing layer 2" may serve as a fire-resistant layer.

If the fire-resistant layer 1 is subject to excessive heat, e.g. temperatures higher than 200°C, the graphite particles expand and increase their volume by up to 400 times. Thus, potential flames are repelled from the surface of the fire-resistant layer. In alternative embodiments, functionally and/or technically equivalent fire-retardant materials can be used as a fire-retardant layer.

The fire-resistant layer 1 is attached to an insulating layer 3 through a vapor-barrier layer 2. The insulating layer 3 comprises combustible fibers, as for example natural fibers, and shows a low thermal conductivity across its thickness. Natural fibers can be chosen of the group of wool, cellulose or hemp. In the embodiment, the insulating layer 3 is made of a hemp fiber material and has a thickness of ca. 2 cm. The respective hemp fiber board can be obtained from Man-ifattura Maiano S.p.A.. under the brand name Naturtherm-CA.

As the fire-resistant layer 1 and the insulating layer 3 are breathable or show hygroscopic properties, a vapor-barrier layer 2 is arranged between the two layers 1, 3. The barrier layer 2 comprises an aluminum foil blocking any water or vapor permeation. In a manufacturing process the vapor-barrier layer 2, e.g. an aluminum foil is laminated onto the fire-resistant layer 1 and having a thickness of about 40µm. Next, the flat fire-resistant-material 1 having a thickness of about 1mm is laminated onto the other side of the aluminum foil 2 using a hot-melt glue.

An embodiment of a vapor barrier layer is shown in Fig. 2. The vapor barrier layer 2 comprises an aluminum foil 21 having a thickness of 40µm with polyethylene (PE) films 22 laminated on both sides using a thin glue layer 23 having a grammage of 1.6 g/m². The vapor-barrier layer 2 is a laminated aluminum foil that can be obtained from Roncoroni S.P.A as triple PE/ALU/PE. The overall grammage is 166,4 g/m².

Using the triplex PE/ALU/PE as vapor barrier has the advantage that a condensation of water at or in the interior of the fiber material is reduced, particular, if the insulating material is applied to HVAC ducts, the fire-resistant layer forming an outer surface of the respective cladding. Further, hot-melt polymeric glues better couple to the PE interface and may reach a lamination strength of 4,75 N/5cm measured according to Afera 5001 - Measurement of Peel Adhesive from Stainless Steel or from its Own Backing ISO 29862 - EN 1939 method F.

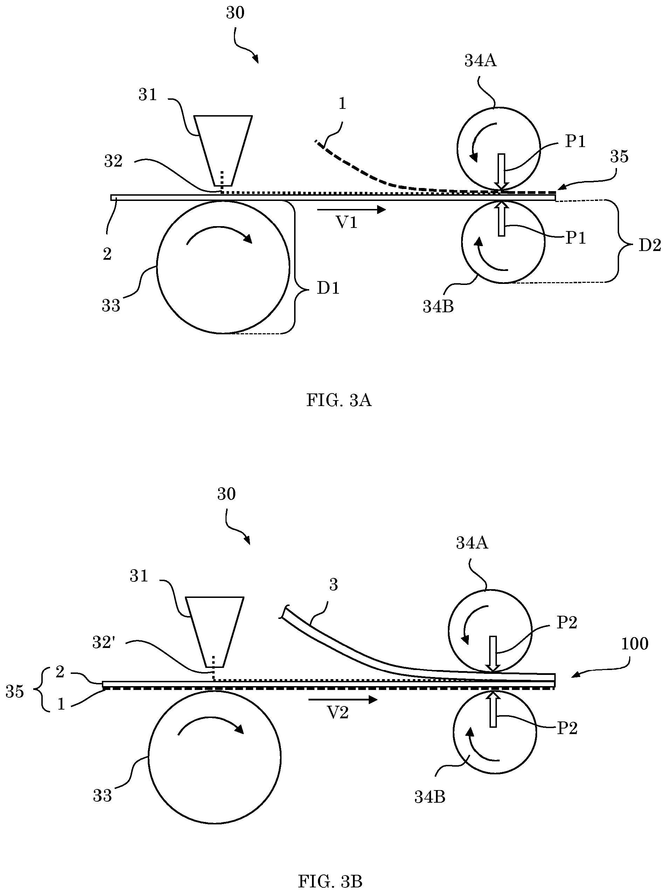

Fig. 3 illustrates a method for manufacturing the multilayer material employing lamination processes. The method includes lamination processes that are depicted in Figs. 3A and 3B.

Fig. 3A and 3B show an embodiment of a lamination apparatus 30 comprising rollers 33, 34A, 34B for conveying and pressing flat materials in their in-plane direction and across their thickness, respectively. Further, a hot-melt glue dispenser 31 is provided. The rollers 33, 34A, 34B are driven and may rotate at a specified velocity so that a conveyed flat material moves at a specific speed V1 and V2 of 8 m/min. A first roller 33 has a diameter D1 360mm and in a pair of second rollers 34A, 34B the rollers have a diameter D2 360mm. In the orientation of Fig. 3 the movement direction runs from left to the right and is also indicated by the feed velocity V1 and V2 of 8/min.

The glue dispenser 31 is arranged above the first roller 33 and is implemented to release liquid or viscous hot melt in the direction of the first roller 33 (downward in the orientation of Fig. 3). To this end the glue is a hot polymeric hot-melt glue available from the company Savarè I.C. under the name E52L and heated to a temperature of 150°C. The dispenser 31 may comprise a heating device and nozzles to uniformly spray the hot-melt onto the flat material conveyed by the first roller 34 in a uniform manner.

A pressure P1 of 1 bar can be applied to a material pinched or clamped between the second rollers 34A, 34B.

A pressure P2 can be applied to a material pinched or clamped between the second rollers 34A, 34B by adjusting a distance or gap of 90% of the original thickness of material (10% of material compression) between the second rollers 34A, 34B.

In a first lamination process depicted in Fig. 3A the triplex PE/ALU/PE as vapor barrier layer 2 is fed to the first roller 33 and conveyed at a speed V1 of 8 m/min. Hot melt is applied to the upper surface of the triplex PE/ALU/PE 2. The hot melt then covers the upper surface with a surface weight of 50 g/m².

In a section along the movement direction between the first roller 33 and the pair of second rollers 34A, 34B, the fire-retardant METRA ZERO material 1 is placed onto the glue-covered upper surface of the triplex PE/ALU/PE 2. The sandwich of the fire-retardant layer 1, hot melt glue 32 and vapor-barrier layer 2 is pinched by the pair of second rollers 34A, 34B and subject to a pressure P1 of 1 bar exercised by the second rollers 34A, 34B along the thickness of the obtained vapor-barrier/fire-resistant layer laminate (triplex PE/ALU/PE/METRA ZERO laminate) 35.

In a second lamination process depicted in Fig. 3B the triplex PE/ALU/PE/METRA ZERO laminate 35 is laminated with the Naturtherm-CA board as insulating layer 3. The bottom surface according to Fig. 3A of the triplex PE/ALU/PE vapor barrier 2 is provided with the Naturtherm-CA board 3 as shown in Fig. 3B.

Attaching the insulating layer to the vapor barrier requires the glue to be viscous enough to diffuse only into superficial fiber layers of the Naturtherm-CA board and to increase the bonding to the vapor barrier. In particular, the exemplary process parameters of the second lamination process, ensure a reliable bonding.

The multilayer material was tested under the conditions specified in EN 13501-1 at the time of filing this application and corresponds to a B rating (Fire Reaction).

The flat multilayer material can be produced as panels or rolls.

The disclosed combination of the three functional layers has the advantage of providing a good fire reaction performance and is based on natural or recycled materials. The multilayer material can be used in a variety of applications requiring insulation.

Fig. 4 shows a cross-sectional view of a further embodiment for a multilayer material as an insulation panel 100' according to the claimed invention. The three functional layers (fire-resistant, vapor barrier and insulation) 1, 2, 3 are laminated to one another as explained above. The fire-resistant layer 1 has a thickness d1 and the insulation layer has a thickness d2, wherein d2>d1. The vapor-barrier layer 2 corresponds to the embodiment of Fig. 2 and has a negligible thickness with respect to the total thickness of the panel 100'. Natural fibers, e.g. hemp, form a mat 3 of a non-woven fibrous insulation material having a relatively low mass density with respect to the fire-resistant layer 1 providing mechanical strength to the layered system 100'.

The rigidity of the fire-resistant layer 1 comprising a cured resin, reinforcement fibers, binders and filler material to contain the graphite particles is higher than the loosely interlocked natural fibers of the insulation layer 3. By varying the thickness d2 of the natural fiber nonwoven, the insulative properties of the panel 100' can be adapted. The panel 100' can be used to clad outdoor walls, roofings, interior surfaces in buildings, HVAC facilities and the like in an environmentally friendly fashion.

Fig. 5 shows an embodiment of an air duct 40 in an HVAC environment (not shown). The Fig.4 shows a section of a duct 40 with a wall 41 enclosing an interior volume I. For example, the duct 40 is implemented to guide an air flow AF through its interior which is indicated by the dashed line AF. The left-hand side of Fig. 4 shows a perspective view of the air duct section 40, and the right-hand side is a cross-sectional view showing an inner side of the wall 41 facing the interior I. The inner side of the wall is cladded along the entire circumference CD (dotted line) with the multilayer material 100. In the embodiment of Fig. 4 the duct 40 has a rectangular cross-section enclosed by four side walls 41A, 41B, 41C, 41D. All side walls 41A, 41B, 41C, 41D are covered with the multilayer material 100 thereby ensuring a good thermal insulation.

In alternative embodiments (not shown), the outer surface of the duct wall 41 is cladded or covered with the multilayer insulation material 100.

### REFERENCE NUMERALS

- 100: multilayer material
- 1: fire-resistant layer
- 2: vapor-barrier layer
- 3: insulating layer
- 21: aluminum foil
- 22: PE film
- 23: glue
- 30: lamination apparatus
- 31: glue container/dispenser
- 32, 32': hot melt glue
- 33: first roller
- 34A, 34B: second roller pair
- 35: vapor barrier/fire-resistant layer laminate
- 40: HVAC duct
- 41: duct wall
- 41A, 41B, 41C, 41D: side walls
- 100': panel
- AF: air flow
- CD: circumference/circumferential direction
- d1, d2: thickness
- D1, D2: diameter
- I: interior
- P1, P2: pressure
- V1, V2: feed (velocity)

## Claims

1. Multilayer material (100) for a thermal insulation, comprising:
a fire-resistant layer (1) comprising expandible graphite,
a vapor-barrier layer (2) comprising a metal foil or polymeric foil, and
an insulating layer (3) comprising combustible hemp fibers,
wherein the vapor-barrier layer (2) is arranged between the fire-resistant layer (1) and the insulating layer (3), the fire-resistant layer (1) has a thickness between 0.2 and 10 mm, the insulating layer (3) has a thickness between 0.5 and 20 cm, and wherein the insulating layer (3) is thicker than the fire-resistant layer (1).

2. The multilayer material according to claim 1, wherein the fire-resistant layer comprises a mechanically reinforcing fibrous material, expandible graphite particles, a resin, additives and fillers.

3. The multilayer material according to any one of claims 1 or 2, wherein the insulating layer (3) is free from a synthetic foam material.

4. The multilayer material according to any one of claims 1 - 3, wherein the fire-resistant layer (1) is attached to the vapor-barrier layer and/or the insulating layer is attached to the vapor-barrier layer (2) through a hot-melt adhesive.

5. The multilayer material according to any one of claims 1 - 4, wherein the vapor-barrier layer (2) and the insulating layer (3) have a predetermined lamination strengthof at least 4 N/5cm at 20°C according to Afera 5001 - Measurement of Peel Adhesive from Stainless Steel or from its Own Backing ISO 29862 - EN 1939 method F.

6. The multilayer material according to any one of claims 1 - 5, wherein the insulating layer (3) comprises at least 50 wt% hemp fibers.

7. The multilayer material according to any one of claims 1 - 6, wherein the insulating layer (3) is implemented to be attached to an object to be isolated as an inner layer, and the fire-resistant layer is implemented as a outermost layer.

8. The multilayer material according to any one of claims 1 - 7, wherein the vapor barrier layer (2) includes an aluminum foil (21) sandwiched between two polyolefin foils (22), wherein the polyolefin foils (22) are laminated (23) to the aluminum foil (23).

9. The multilayer material according to any one of claims 1 - 8, wherein the fire-resistant layer (1) comprises a cladding layer sandwiched between a functional layer including the expansive or expandible graphite, and a reinforcement layer including a fibrous material for mechanical support, wherein the cladding layer is manufactured with a first fluid mineral mixture comprising a resin, additives and fillers.

10. The multilayer material according to any one of claims 1 - 9, wherein the insulating layer is a hemp-fiber panel.

11. The multilayer material according to any one of claims 1 - 9, wherein the insulating layer comprises less than 20wt% synthetic fibers and/or synthetic polymer material.

12. Use of the multilayer material according to any one of claims 1 - 11 for insulating roofings, house walls, heating pipes or air ducts.

13. An heating, ventilation, air conditioning (HVAC) apparatus comprising a duct (40) having wall, wherein the surface of the wall (41) is at least partially covered by a multilayer material (100) according to any one of claims 1 - 11, wherein the wall (41), the insulating layer (3), the vapor-barrier layer (2) and the fire-resistant layer (1) are arranged sequentially in this order.

14. The HVAC apparatus of claim 13, wherein the wall (41) is continuously cladded with the multilayer material (100) along a circumferential direction of the duct 40.

15. A method for manufacturing a multilayer material according to any one of claims 1 - 11 comprising:
laminating a fire-resistant layer (1) comprising expandible graphite with a
a vapor-barrier layer (2) comprising a metal foil or a polymeric foil through a first lamination process; and
laminating the vapor-barrier layer (2) with an insulating layer (3) comprising combustible fibers through a second lamination process;
wherein the vapor-barrier layer (2) and the insulating layer (3) are glued to one another for obtaining a predetermined lamination strength.

## Patentansprüche

1. Mehrschichtiges Material (100) für eine Wärmedämmung, aufweisend:
eine feuerbeständige Schicht (1), die expandierbares Graphit aufweist,
eine Dampfsperrschicht (2), die eine Metallfolie oder Polymerfolie aufweist, und
eine Isolierschicht (3), die brennbare Hanffasern aufweist,
wobei die Dampfsperrschicht (2) zwischen der feuerbeständigen Schicht (1) und der Isolierschicht (3) angeordnet ist, die feuerbeständige Schicht (1) eine Dicke zwischen 0,2 und 10 mm aufweist, die Isolierschicht (3) eine Dicke zwischen 0,5 und 20 cm aufweist, und wobei die Isolierschicht (3) dicker als die feuerbeständige Schicht (1) ist.

2. Mehrschichtiges Material nach Anspruch 1, wobei die feuerbeständige Schicht ein mechanisch verstärkendes Fasermaterial, expandierbare Graphitpartikel, ein Harz, Additive und Füllstoffe aufweist.

3. Mehrschichtiges Material nach einem der Ansprüche 1 oder 2, wobei die Isolierschicht (3) frei von einem synthetischen Schaummaterial ist.

4. Mehrschichtiges Material nach einem der Ansprüche 1 - 3, wobei die feuerbeständige Schicht (1) an der Dampfsperrschicht befestigt ist und/oder die Isolierschicht an der Dampfsperrschicht (2) durch einen Heißschmelzklebstoff befestigt ist.

5. Mehrschichtiges Material nach einem der Ansprüche 1 - 4, wobei die Dampfsperrschicht (2) und die Isolierschicht (3) eine vorbestimmte Laminierungsfestigkeit von mindestens 4 N/5 cm bei 20 °C gemäß Afera 5001 - Measurement of Peel Adhesive from Stainless Steel or from its Own Backing ISO 29862 - EN 1939 method F aufweisen.

6. Mehrschichtiges Material nach einem der Ansprüche 1 - 5, wobei die Isolierschicht (3) mindestens 50 Gew.-% Hanffasern aufweist.

7. Mehrschichtiges Material nach einem der Ansprüche 1 - 6, wobei die Isolierschicht (3) ausgebildet ist, an einem zu isolierenden Objekt als innere Schicht befestigt zu werden, und die feuerbeständige Schicht als äußerste Schicht ausgebildet ist.

8. Mehrschichtiges Material nach einem der Ansprüche 1 - 7, wobei die Dampfsperrschicht (2) eine Aluminiumfolie (21) aufweist, die zwischen zwei Polyolefinfolien (22) angeordnet ist, wobei die Polyolefinfolien (22) auf die Aluminiumfolie (23) laminiert (23) sind.

9. Mehrschichtiges Material nach einem der Ansprüche 1 - 8, wobei die feuerbeständige Schicht (1) eine Mantelschicht aufweist, die zwischen einer Funktionsschicht, die das expansive bzw. expandierbare Graphit aufweist, und einer Verstärkungsschicht, die ein Fasermaterial zur mechanischen Unterstützung aufweist, angeordnet ist, wobei die Mantelschicht mit einer ersten flüssigen Mineralmischung hergestellt ist, die ein Harz, Additive und Füllstoffe aufweist.

10. Mehrschichtiges Material nach einem der Ansprüche 1 - 9, wobei die Isolierschicht eine Hanffaserplatte ist.

11. Mehrschichtiges Material nach einem der Ansprüche 1 - 9, wobei die Isolierschicht weniger als 20 Gew.-% synthetische Fasern und/oder synthetisches Polymermaterial aufweist.

12. Verwendung des mehrschichtigen Materials nach einem der Ansprüche 1 - 11 zum Isolieren von Dächern, Hauswänden, Heizrohren oder Luftkanälen.

13. Heizungs-, Lüftungs-, Klimatisierungs- (HLK-) Vorrichtung, die einen Kanal (40) mit einer Wand aufweist, wobei die Oberfläche der Wand (41) zumindest teilweise durch ein mehrschichtiges Material (100) nach einem der Ansprüche 1 - 11 bedeckt ist, wobei die Wand (41), die Isolierschicht (3), die Dampfsperrschicht (2) und die feuerbeständige Schicht (1) in dieser Reihenfolge hintereinander angeordnet sind.

14. HLK-Vorrichtung nach Anspruch 13, wobei die Wand (41) entlang einer Umfangsrichtung des Kanals (40) kontinuierlich mit dem mehrschichtigen Material (100) ummantelt ist.

15. Verfahren zur Herstellung eines mehrschichtigen Materials nach einem der Ansprüche 1 - 11, aufweisend:
Laminieren einer feuerbeständigen Schicht (1), die expandierbares Graphit aufweist, mit einer Dampfsperrschicht (2), die eine Metallfolie oder eine Polymerfolie aufweist, durch einen ersten Laminierungsprozess; und
Laminieren der Dampfsperrschicht (2) mit einer Isolierschicht (3), die brennbare Fasern aufweist, durch einen zweiten Laminierungsprozess;
wobei die Dampfsperrschicht (2) und die Isolierschicht (3) miteinander verklebt sind, um eine vorbestimmte Laminierungsfestigkeit zu erhalten.

## Revendications

1. Matériau multicouche (100) pour une isolation thermique, comprenant :
une couche résistante au feu (1) comprenant du graphite expansible,
une couche formant barrière à la vapeur (2) comprenant une feuille métallique ou une feuille polymère, et
une couche isolante (3) comprenant des fibres de chanvre combustibles, dans lequel la couche formant barrière à la vapeur (2) est agencée entre la couche résistante au feu (1) et la couche isolante (3), la couche résistante au feu (1) a une épaisseur entre 0,2 et 10 mm, la couche isolante (3) a une épaisseur entre 0,5 et 20 cm, et dans lequel la couche isolante (3) est plus épaisse que la couche résistante au feu (1).

2. Matériau multicouche selon la revendication 1, dans lequel la couche résistante au feu comprend un matériau fibreux de renforcement mécanique, des particules de graphite expansibles, une résine, des additifs et des charges.

3. Matériau multicouche selon l'une quelconque des revendications 1 ou 2, dans lequel la couche isolante (3) est exempte d'un matériau de mousse synthétique.

4. Matériau multicouche selon l'une quelconque des revendications 1 à 3, dans lequel la couche résistante au feu (1) est fixée à la couche formant barrière à la vapeur et/ou la couche isolante est fixée à la couche formant barrière à la vapeur (2) par l'intermédiaire d'un adhésif thermofusible.

5. Matériau multicouche selon l'une quelconque des revendications 1 à 4, dans lequel la couche formant barrière à la vapeur (2) et la couche isolante (3) ont une résistance de stratification prédéterminée d'au moins 4 N/5 cm à 20 °C selon la méthode Afera 5001 - Measurement of Peel Adhesive from Stainless Steel or from its Own Backing ISO 29862 - EN 1939 method F.

6. Matériau multicouche selon l'une quelconque des revendications 1 à 5, dans lequel la couche isolante (3) comprend au moins 50 % en poids de fibres de chanvre.

7. Matériau multicouche selon l'une quelconque des revendications 1 à 6, dans lequel la couche isolante (3) est mise en oeuvre pour être fixée à un objet à isoler en tant que couche interne, et la couche résistante au feu est mise en oeuvre en tant que couche la plus externe.

8. Matériau multicouche selon l'une quelconque des revendications 1 à 7, dans lequel la couche formant barrière à la vapeur (2) comprend une feuille d'aluminium (21) prise en sandwich entre deux feuilles de polyoléfine (22), dans lequel les feuilles de polyoléfine (22) sont stratifiées (23) sur la feuille d'aluminium (23).

9. Matériau multicouche selon l'une quelconque des revendications 1 à 8, dans lequel la couche résistante au feu (1) comprend une couche de gainage prise en sandwich entre une couche fonctionnelle comprenant le graphite expansé ou expansible, et une couche de renforcement comprenant un matériau fibreux pour un support mécanique, dans lequel la couche de gainage est fabriquée avec un premier mélange minéral fluide comprenant une résine, des additifs et des charges.

10. Matériau multicouche selon l'une quelconque des revendications 1 à 9, dans lequel la couche isolante est un panneau de fibres de chanvre.

11. Matériau multicouche selon l'une quelconque des revendications 1 à 9, dans lequel la couche isolante comprend moins de 20 % en poids de fibres synthétiques et/ou de matériau polymère synthétique.

12. Utilisation du matériau multicouche selon l'une quelconque des revendications 1 à 11 pour isoler des toitures, des murs d'habitation, des tuyaux de chauffage ou des conduits d'air.

13. Appareil de chauffage, ventilation, climatisation (CVC) comprenant un conduit (40) ayant une paroi, dans lequel la surface de la paroi (41) est au moins partiellement recouverte par un matériau multicouche (100) selon l'une quelconque des revendications 1 à 11, dans lequel la paroi (41), la couche isolante (3), la couche formant barrière à la vapeur (2) et la couche résistante au feu (1) sont agencées séquentiellement dans cet ordre.

14. Appareil CVC selon la revendication 13, dans lequel la paroi (41) est revêtue en continu avec le matériau multicouche (100) le long d'une direction circonférentielle du conduit (40).

15. Procédé de fabrication d'un matériau multicouche selon l'une quelconque des revendications 1 à 11, comprenant :
la stratification d'une couche résistante au feu (1) comprenant du graphite expansible avec une couche formant barrière à la vapeur (2) comprenant une feuille métallique ou une feuille polymère par un premier procédé de stratification ; et
la stratification de la couche formant barrière à la vapeur (2) avec une couche isolante (3) comprenant des fibres combustibles par un second procédé de stratification ;
dans lequel la couche formant barrière à la vapeur (2) et la couche isolante (3) sont collées l'une à l'autre pour obtenir une résistance de stratification prédéterminée.
